# EUROPÄISCHE PATENTSCHRIFT

(11) **EP 1 473 258 B1**
(45) Veröffentlichungstag und Bekanntmachung des Hinweises auf die Patenterteilung: **23.01.2008**
(21) Anmeldenummer: 04007515.2
(22) Anmeldetag: 29.03.2004
(51) Int. Cl.: B65G 13/10, B62D 65/00, B61B 13/12

(54) **Übergabestation zum Transportieren von Skidrahmen von einem Skidförderer zu einem anderen Skidförderer einer Skidförderline**
Transferring station for moving skids from a conveyor to another in a skid-conveyors line
Station de transfert pour déplacer des berceaux d'un convoyeur à un autre dans ligne de convoyeurs de berceaux

(30) Priorität: 02.05.2003 DE 10319613
(43) Veröffentlichungstag der Anmeldung: 03.11.2004
(73) Patentinhaber: Bürener Maschinenfabrik GmbH, 33142 Büren (DE)
(72) Erfinder: Krause, Dieter Dr., 33142 Büren (DE); Peitz, Burkhard, 33129 Delbrück (DE)
(74) Vertreter: Sparing Röhl Henseler Patentanwälte European Patent Attorneys

(56) Entgegenhaltungen:
- WO-A-00/06445
- DE-C- 471 890
- US-A- 5 013 203

## Beschreibung

Die Erfindung betrifft eine Übergabestation zum Transportieren von Skidrahmen von einem Skidförderer zu einem anderen Skidförderer einer Skidförderlinie nach dem Oberbegriff des Anspruchs 1. Solche Skidförderer sind z.B. aus der EP-A-0 010 548 bekannt.

Derartige Skidförderlinien mit einer Mehrzahl Skidförderer zur Bildung einer Führungsbahn, die zwei im Abstand voneinander angeordnete und in einer Förderrichtung verlaufende Reihen von Führungselementen aufweist, umfassen Übergabestationen eingangs- und/oder ausgangsseitig einzelne Skidförderer, um die Skidrahmen bei Richtungsänderungen der Skidförderlinie von einem Skidförderer zu einem anderen Skidförderer transportieren zu können. Bekannt sind Querförderer, mit denen die Skidrahmen horizontal zwischen nebeneinander angeordneten Skidförderem transportiert werden. Die Übergabestationen besitzen dazu vorzugsweise einen jeweils einen Skidrahmen aufnehmenden Führungsbahnabschnitt.

Als nachteilig erwiesen hat sich, daß die Übergabestationen den Förderfluß in seiner Kontinuität stören.

Aufgabe der Erfindung ist es daher, eine Übergabestation zum Transportieren von Skidrahmen zu schaffen, die den Förderfluß beim Übergang von einem Skidförderer zu einem anderen Skidförderer unter Fortsetzung der Skidförderlinie verbessert.

Diese Aufgabe wird durch die Merkmale des kennzeichnenden Teils des Anspruchs 1 gelöst.

Hierdurch wird eine Übergabestation geschaffen, die einen im Kreis drehenden Hubtisch aufweist, dessen Rollenbahn fortlaufend abwechselnd als eingangs- und ausgangsseitige Drehbahn arbeitet, wobei die Anordnung zwischen zum Hubtisch verlaufenden Rahmenteilen eine versenkte Bauweise für kurze Hubwege ermöglicht. Der Hubtisch kann je nach seiner Drehstellung gegenüber den zu verbindenden Skidförderem als Längsförderer, Querförderer oder Umkehrförderer arbeiten. Die Förderrichtung des Hubtisches ist folglich wählbar. Der Förderfluß wird hierdurch weit geringer behindert als durch übliche Übergabestationen, bei denen der Hubtisch richtungsfest angeordnet ist. Der Hubtisch mit wählbarer Förderrichtung kann eine Förderlinie kontinuierlich fortsetzten und dadurch einen Skidförderer ersetzen und alternativ bedarfsbezogen ausschwenken für eine Richtungsumkehr eines Skidrahmens oder ein Befördem eines Skidrahmens zu einem in anderer Förderrichtung arbeitenden Skidrahmen.

Vorzugsweise ist das Drehgerüst als ein Doppel-T-Träger ausgebildet mit einem beidseitig vom Drehmittelpunkt radial sich erstreckenden Längsträger und mit zwei mit Abstand zum Drehmittelpunkt verlaufenden Querträgem, zwischen denen der Hubtisch mit einer im Drehmittelpunkt liegenden Drehachse angeordnet ist. Der Hubtisch erhält hierdurch eine stabile Auflage an der Fahschiene.

Vorzugsweise ist mindestens eines der Laufräder angetrieben, um als an der Fahrschiene angreifendes Reibrad eine Drehbewegung des Drehgerüstes auszulösen.

Weitere Vorteile und Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

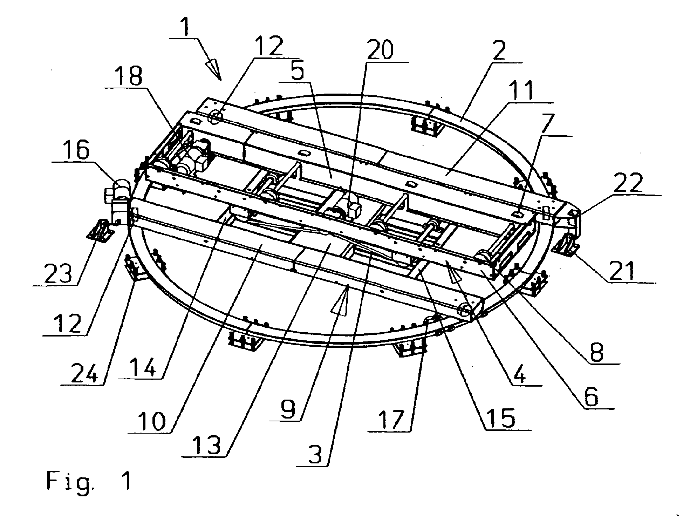

Fig. 1 zeigt schematisch eine seitliche Draufsicht einer Übergabestation.

Die Erfindung betrifft eine Übergabestation zum Transportieren von Skidrahmen von einem Skidförderer zu einem anderen Skidförderer einer Skidförderlinie mit einer Mehrzahl Skidförderer zum Vorschub von Skidrahmen und der darauf montierten Werkstücke, insbesondere Fahrzeugkarosserien. Derartige Skidförderer umfassen Rollenbahnen mit jeweils zwei im Abstand voneinander angeordneten Sätzen von Rollen für Skidkufen von Skidrahmen. Die Rollen der Skidförderer sind zumindest teilweise antreibbar, um die Skidrahmen mit einer Prozeßvorschubgeschwindigkeit in einer Förderrichtung schieben zu können.

Die Fig. 1 zeigt eine Übergabestation zum Transportieren von Skidrahmen zwischen nicht dargestellten Skidförderem. Die Übergabestation wird gebildet von einer Drehbahn 1, die eine feststehende kreisförmige Fahrschiene 2 umfaßt, auf der ein Hubtisch 3 mit einer Rollenbahn 4 drehbar gelagert ist. Die Rollenbahn 4 besitzt parallel zueinander verlaufende, eine Förderrichtung bestimmende Längsschienen 5, 6, an denen parallel zur Förderrichtung hintereinander angeordnete Rollen 7, 8 abgestützt sind. Die Fahrschiene 2 definiert eine Drehebene für die Rollenbahn 4 des Hubtisches 3. Die Drehebene ist vorzugsweise horizontal, kann jedoch auch geneigt oder vertikal sein.

Zur Drehung des Hubtisches 3 um den Drehmittelpunkt der Fahrschiene 2 sitzt der Hubtisch 3 auf einem Drehgerüst 9, das beidseitig benachbart zum Hubtisch 3 verlaufende Rahmenteile 10, 11 umfaßt, die sich endseitig jeweils über mindestens ein Laufrad 12 an der Fahrschiene 2 abstützen. Das Drehgerüst 9 besitzt einen festen Drehpunkt, der vorzugsweise von einem auf einem Aufstellboden abgestützten Zapfen gebildet wird. Gleiches gilt für die Fahrschiene 2, die mittels Halterungen 14 ortsfest auf einem Aufstellboden fixierbar ist.

Das Drehgerüst 9 ist vorzugsweise als eine Blechkantung ausgebildet mit einem beidseitig vom Drehmittelpunkt radial und/oder dazu versetzt sich erstreckenden Längsträger 13 und zwei mit Abstand zum Drehmittelpunkt verlaufenden, als Querträger ausgebildeten Rahmenteilen 10, 11, zwischen denen der Hubtisch 3 mit einer im Drehmittelpunkt liegenden Drehachse angeordnet ist. Die Rahmenteile 10, 11 können über zusätzliche Längsstreben 14, 15 miteinander verbunden sein, um dem Hubtisch 3 eine breite Auflage am Drehgerüst 9 zu geben. Die Rahmenteile 10, 11 sind vorzugsweise sekantenförmig zur runden Fahrschiene 2 ausgeführt.

Mindestens ein Laufrad 12 eines der Rahmenteile 10, 11 ist als Reibrad antreibbar. Für den Antrieb ist ein Antriebsmotor 16 vorgesehen, der an dem mindestens einen Laufrad 12 angreift. Zur Steuerung des Drehens des Drehgerüstes 9 ist an der Fahrschiene 2 mindestens eine Endschalterhalterung 17 für einen Endschalter vorgesehen. Hierdurch wird der Drehweg des Hubtisches 3 gesteuert.

Der Antrieb der Rollen 7, 8 der Rollenbahn 4 erfolgt über eine Antriebsvorrichtung 18. Die mehreren hintereinander angeordneten Rollen 7, 8 sind über einen Antriebsriemen aneinandergekoppelt. Die Rollen 7, 8 der Rollenbahn 4 können von einer Schutzabdeckung 19 abgedeckt sein, welche jeweils der Form der Rollen 7 angepaßte Rollenöffnungen aufweisen, aus welchen die Rollen 7 geringfügig überstehen.

Der Hubtisch 3 bildet abhängig von seiner Drehposition einen ausgangsseitigen als auch eingangsseitigen Skidförderer zwischen zwei Skidförderern, wobei wählbare Drehwege einstellbar sind.

Der Hubtisch 3 ist mit einer bekannten Hubvorrichtung ausstattbar für Hubwege zwischen vorzugsweise 80 und 100 mm, um Skidrahmen gegenüber den Skidförderem einer Skidförderlinie anheben zu können. Vorzugsweise ist der Hubtisch 3 als Exzenter-Hubtisch ausgebildet, für dessen Antrieb eine Antriebsvorrichtung 20 vorgesehen ist.

Benachbart zur Fahrschiene 2 kann ein Stopper 21 fixiert sein, gegen den ein Anschlag 22 des Drehgerüstes 9 verfahrbar ist, um das Drehgerüst 9 in eine Grundstellung zu positionieren. Ein von dem Stopper 21 um 180° versetzt angeordneter zweiter Stopper 23 ist vorgesehen, um das Drehgerüst 9 in einer zur Grundstellung um 180° versetzten Arbeitsstellung zu positionieren.

## Patentansprüche

1. Übergabestation zum Transportieren von Skidrahmen von einem Skidförderer zu einem anderen Skidförderer einer Skidförderlinie zum Vorschub von Skidrahmen und der darauf montierten Werkstücke, insbesondere Fahrzeugkarosserien, mit einer Mehrzahl Skidförderer, die Rollenbahnen (4), aufweisen mit jeweils zwei im Abstand voneinander angeordneten Sätzen von Rollen (7,8) für Skidkufen von Skidrahmen, **dadurch gekennzeichnet, daß** zum Transportieren von Skidrahmen zwischen zwei Skidförderern eine Drehbahn (1) vorgesehen ist mit einer feststehenden kreisförmigen Fahrschiene (2), auf der ein eine Rollenbahn (4) aufweisender Hubtisch (3) drehbar um einen Drehmittelpunkt der Fahrschiene (2) gelagert ist, wozu der Hubtisch (3) auf einem Drehgerüst (9) sitzt, das beidseitig benachbart zum Hubtisch (3) verlaufende Rahmenteile (10, 11) umfaßt, die sich endseitig jeweils über mindestens ein Laufrad (12) an der Fahrschiene (2) abstützen.

2. Übergabestation nach Anspruch 1, **dadurch gekennzeichnet, daß** das Drehgerüst (9) als eine Blechkantung ausgebildet ist mit einem beidseitig vom Drehmittelpunkt radial sich erstreckenden Längsträger (13) und mit zwei mit Abstand zum Drehmittelpunkt verlaufenden, als Querträger ausgebildeten Rahmenteilen (10, 11), zwischen denen der Hubtisch (3) mit einer im Drehmittelpunkt liegenden Drehachse angeordnet ist.

3. Übergabestation nach Anspruch 2, **dadurch gekennzeichnet, daß** die Querträger sekantenförmig zur runden Fahrschiene (2) auf dieser geführt sind.

4. Übergabestation nach einem der Ansprüche 1 bis 3, **dadurch gekennzeichnet, daß** das Drehgerüst (9) horizontal drehbar angeordnet ist.

5. Übergabestation nach einem der Ansprüche 1 bis 4, **dadurch gekennzeichnet, daß** mindestens eines der Laufräder (12) als Reibrad antreibbar ist.

6. Übergabestation nach einem der Ansprüche 1 bis 5, **dadurch gekennzeichnet, daß** an der Fahrschiene (2) mindestens eine Endschalterhalterung (17) zur Aufnahme eines Endschalters und Steuern eines Antriebes zum Drehen des Drehgerüstes (9) angeordnet ist.

7. Übergabestation nach einem der Ansprüche 1 bis 6, **dadurch gekennzeichnet, daß** benachbart zur Fahrschiene (2) Stopper (21, 23) angeordnet sind, gegen die ein Anschlag (22) am Drehgerüst (9) verfahrbar ist zur Positonierung des Hubtisches (3) in einer Grundstellung und mindestens einer Arbeitsstellung.

## Claims

1. Transfer station for transporting skid frames from one skid conveyer to another skid conveyer of a skid conveying line for the feed of skid frames and the workpieces, in particular vehicle bodies, mounted thereon, having a plurality of skid conveyers which have roller tracks (4) with in each case two sets, which are arranged spaced apart from one another, of rollers (7, 8) for skid runners of skid frames, **characterized in that**, in order to transport skid frames between two skid conveyers, a rotary track (1) is provided, having a stationary circular running rail (2) on which a lifting table (3), which has a roller track (4), is mounted so as to be rotatable about a centre of rotation of the running rail (2), for which purpose the lifting table (3) is seated on a rotary stand (9) which comprises frame parts (10, 11) which run at both sides adjacent to the lifting table (3) and which are supported at the end sides on the running rail (2) in each case by means of at least one running wheel (12).

2. Transfer station according to Claim 1, **characterized in that** the rotary stand (9) is formed as a bent metal sheet with a longitudinal member (13) which extends radially at both sides from the centre of rotation, and having two frame parts (10, 11) which run with a spacing with respect to the centre of rotation and are formed as transverse members and between which the lifting table (3) is arranged with a rotational axis situated in the centre of rotation.

3. Transfer station according to Claim 2, **characterized in that** the transverse members are guided on the round running rail (2) in the manner of secants with respect to the latter.

4. Transfer station according to one of Claims 1 to 3, **characterized in that** the rotary stand (9) is arranged so as to be rotatable horizontally.

5. Transfer station according to one of Claims 1 to 4, **characterized in that** at least one of the running wheels (12) can be driven as a friction wheel.

6. Transfer station according to one of Claims 1 to 5, **characterized in that** at least one limit switch bracket (17) for holding a limit switch and controlling a drive for rotating the rotary stand (9) is arranged on the running rail (2).

7. Transfer station according to one of Claims 1 to 6, **characterized in that** stoppers (21, 23) are arranged adjacent to the running rail (2), against which stoppers (21, 23) a stop (22) on the rotary stand (9) can be moved in order to position the lifting table (3) in a base position and at least one working position.

## Revendications

1. Station de transfert pour transporter des cadres à patins depuis un convoyeur à patins vers un autre convoyeur à patins d'un train de convoyeurs à patins pour faire avancer des cadres à patins et les pièces à oeuvrer montées sur ceux-ci, en particulier des carrosseries de véhicules, comportant une pluralité de convoyeurs à patins qui présentent des transporteurs à galets avec chacun deux jeux de galets (7, 8) agencés à distance l'un de l'autre, pour des patins de cadres à patins, **caractérisée en ce que** pour transporter des cadres à patins entre deux convoyeurs à patins, il est prévu un transporteur rotatif (1) avec un rail de roulement (2) de forme circulaire fixe sur lequel une table élévatrice (3) présentant un transporteur à galets (4) est montée rotative autour d'un point central de rotation du rail de roulement (2), et à cet effet, la table élévatrice (3) est logée sur une ossature rotative (9) qui comprend des parties de cadre (10, 11) s'étendant des deux côtés au voisinage de la table élévatrice (3), lesquelles prennent chacune appui côté extrémité sur le rail de roulement (2) via au moins une roue de roulement (12).

2. Station de transfert selon la revendication 1, **caractérisée en ce que** l'ossature rotative (9) est réalisée sous forme de pièce pliée en tôle avec un longeron (13) s'étendant radialement des deux côtés du point central de rotation et avec deux parties de cadre (10, 11) s'étendant à distance du point central de rotation et réalisées sous forme de traverses, entre lesquelles la table élévatrice (3) est agencée avec un axe de rotation situé au point central de rotation.

3. Station de transfert selon la revendication 2, **caractérisée en ce que** les traverses sont guidées sur le rail de roulement (2) rond sous forme de sécantes par rapport à celui-ci.

4. Station de transfert selon l'une des revendications 1 à 3, **caractérisée en ce que** l'ossature rotative (9) est agencée rotative à l'horizontale.

5. Station de transfert selon l'une des revendications 1 à 4, **caractérisée en ce qu'**au moins une des roues de roulement (12) peut être entraînée en tant que galet de friction.

6. Station de transfert selon l'une des revendications 1 à 5, **caractérisée en ce que** sur le rail de roulement (2) est agencée au moins une monture (17) d'interrupteur de fin de course pour recevoir un interrupteur de fin de course et pour commander un entraînement pour mettre en rotation l'ossature rotative (9).

7. Station de transfert selon l'une des revendications 1 à 6, **caractérisée en ce qu'**au voisinage du rail de roulement (2) sont agencés des taquets (21, 23) contre lesquels on peut faire avancer une butée (22) sur l'ossature rotative (9) pour positionner la table d'élévation (3) dans une position de base et dans au moins une position de travail.
